# EUROPÄISCHE PATENTSCHRIFT

(11) **EP 1 051 289 B1**
(45) Veröffentlichungstag und Bekanntmachung des Hinweises auf die Patenterteilung: **05.10.2005**
(21) Anmeldenummer: 99900434.4
(22) Anmeldetag: 27.01.1999
(51) Int. Cl.: B27K 3/50

(54) **HOLZSCHUTZMITTEL**
PROTECTIVE AGENTS FOR WOOD
PRODUIT DE PRESERVATION DU BOIS

(30) Priorität: 06.02.1998 CH 29298
(43) Veröffentlichungstag der Anmeldung: 15.11.2000
(73) Patentinhaber: Lonza AG, 4052 Basel (CH)
(72) Erfinder: LICHTENBERG, Florian, D-79639 Grenzach-Wyhlen (DE); MARX, Hans-Norbert, D-77815 Bühl (DE)
(86) Internationale Anmeldenummer: PCT/CH1999/000035
(87) Internationale Veröffentlichungsnummer: WO 1999/039886

(56) Entgegenhaltungen:
- EP-A- 0 328 466
- EP-A- 0 515 899
- EP-A- 0 533 016
- DE-A- 19 535 664
- FR-A- 2 502 054
- US-A- 3 617 314

## Beschreibung

Die vorliegende Erfindung betrifft Anstrichstoffe und Behandlungsmittel zum Schutz von Holz und/oder zellulosehaltigen Substraten gegen biologische Materialzerstörung, sowie ein Verfahren zur Herstellung der Anstrichstoffe und Behandlungsmittel und ein Verfahren zu deren Anwendung.

Die EP 533 016 A beschreibt Lösungsmittel - und emulgatorfreie - mikrobiozide Wirkstoffformulierungen auf der Basis von Azolfungiziden u./o. Benzimidazolderivaten und quartären Ammoniumverbindungen.

Zur Verringerung der Umweltbelastung durch organische Lösemittel in Anstrichstoffen ist es Stand der Technik, Bindemittel zu verwenden, die in Wasser emulgierbar oder dispergierbar sind. Vor allem für Anstrichstoffe, die auf Holz oder Holzwerkstoffen angewandt werden, stehen modifizierte, trocknende Öle (z. B. Leinöl, Sojaöl etc.) oder entsprechend modifizierte Alkydharze zur Verfügung. Die Emulgierbarkeit solcher Öle oder Alkydharze erreicht man durch Zugabe von Emulgatoren oder auf eleganterem Wege durch den Einbau von hydrophilen Gruppen in das Bindemittelmolekül, z. B. durch Umesterung mit Di- oder Polycarbonsäuren und/oder Umsetzung mit Polyalkoholen, Polyethylenglycolen, Ethylenoxid etc. Durch den Einbau von hydrophilen Gruppen bleiben die filmbildenden Eigenschaften der Öle und Alkydharze weitgehend unbeeinflusst.

Die Öle und Alkydharze mit hydrophilen Molekülgruppen haben gegenüber den Systemen mit zugesetztem Emulgator den Vorteil, dass nach der oxidativen Trocknung der Emulgator nicht ausgewaschen werden kann und somit nicht durch freien Emulgator der Austrag von Wirkstoffen (z. B. gegen Pilze und/oder Insekten) gefördert oder die Wetterfestigkeit nachteilig beeinflusst wird.

Ungeachtet dessen, ob den Systemen ein separater Emulgator zugesetzt oder hydrophile Molekülgruppen in die Öle oder Alkydharze eingebaut werden, ergibt sich bei den bekannten Anstrichstoffen und Behandlungsmitteln auf Wasserbasis das generelle Problem, dass die gebrauchsfertigen Emulsionen nur eine begrenzte Haltbarkeit haben. Bei längerem Stehen der Zubereitungen kommt es zu Phasentrennungen, Aufrahmerscheinungen oder Sedimentation der schwereren Bestandteile, wobei eine Reemulgierbarkeit nicht immer gegeben ist.

Ein weiterer Nachteil der bekannten Emulsionen und Dispersionen, insbesondere solcher mit bioziden Wirkstoffen, ist die mangelnde Eindringfähigkeit in Holz und Holzwerkstoffe. Die Wirkstoffe und Additive befinden sich in der Regel in der dispergierten organischen Phase, die sich oberflächennah anreichert, während lediglich das Dispersionsmittel, also das Wasser, in tiefere Schichten eindringt. Eine homogene Verteilung von Wirkstoffen, zum Beispiel gegen Fäulnis, Bläue oder Insekten, ist mit diesen Systemen praktisch nicht erreichbar und die biozide Wirkung geht verloren, sobald die Oberfläche abgetragen oder beschädigt ist.

Aufgabe der vorliegenden Erfindung war daher, lagerstabile Anstrichstoffe und Behandlungsmittel auf Wasserbasis bereitzustellen, deren biozide Wirkstoffe gut in Holz oder ähnliche Werkstoffe eindringen.

Erfindungsgemäss wird diese Aufgabe durch die Anstrichstoffe und Behandlungsmittel nach Patentanspruch 1 gelöst.

Es wurde überraschend gefunden, dass sich die oben genannten Nachteile der bekannten Anstrichstoffe und Behandlungsmittel beheben lassen, wenn den wässrigen Emulsionen von natürlichen oder synthetischen Ölen, Alkydharzen auf Basis natürlicher oder synthetischer Öle, oder Gemischen der vorstehend genannten Bindemittel biozid wirksame Salze aus primären, sekundären oder tertiären Aminen oder quartäre Ammoniumsalze oder Gemische der vorstehend genannten Salze zugesetzt werden. Die erfindungsgemäss einsetzbaren Aminsalze und Ammoniumsalze besitzen mindestens eine Alkylgruppe mit 6 bis 24, vorzugsweise mit 8 bis 18 Kohlenstoffatomen. Unter primären Aminsalzen sind hierbei auch solche zu verstehen, die neben einer oder mehreren primären Aminogruppen auch eine oder mehrere sekundäre und/oder tertiäre Aminogruppe(n) im Molekül enthalten. Die erfindungsgemässen Anstrichstoffe und Behandlungsmittel enthalten 2 bis 50%, vorzugsweise 5 bis 25%, Bindemittel und 0,5 bis 40%, vorzugsweise 1 bis 10%, Amin- und/oder Ammoniumsalze. Hier und im folgenden sind alle Prozentangaben, soweit nicht anderweitig definiert, in Massenprozenten und auf den gesamte Zusammensetzung bezogen. Unter dem Begriff "Alkylgruppe" sind sowohl lineare als auch verzweigte Gruppen mit der jeweils angegebenen Zahl von Kohlenstoffatomen zu verstehen.

So wird zum Beispiel eine 15 Teile Bindemittel (Öl oder Alkydharz mit hydrophilen Molekülgruppen) und 85 Teile Wasser enthaltende Emulsion nach Zusatz von 5 Teilen DDAC (Didecyldimethylammoniumchlorid) nach kurzem Rühren klar, jede Trübung verschwindet und es entsteht eine vollständig transparente Lösung. Selbst bei jahrelanger Lagerung, bei Temperaturwechselbelastung und nach Einfrieren und Auftauen des Systems tritt keine Phasentrennung oder Entmischung ein.

Als Amine für die erfindungsgemässen Anstrichstoffe und Behandlungsmittel eignen sich beispielsweise:
als primäre Amine: C₈₋₁₈-Alkylamine, *N*-(C₈₋₁₈-Alkyl)-ethylendiamine, *N*-(C₈₋₁₈-Alkyl)-propylendiamine *N*,*N*-Bis-(2-aminoethyl)-C₈₋₁₈-alkylamine, *N*,*N*-Bis-(3-aminopropyl)-C₈₋₁₈-alkylamine,
als sekundäre Amine: Methyl- oder Ethyl-C₈₋₁₈-alkylamine,
und als tertiäre Amine: Dimethyl-di(C₈₋₁₈-alkyl)amine.
Als Salze der Amine eignen sich beispielsweise die Halogenide, insbesondere die Chloride und Bromide, sowie die Salze organischer Säuren. Unter organischen Säuren sind hier und im folgenden insbesondere lineare oder verzweigte C₁₋₆-Carbonsäuren wie beispielsweise Ameisensäure, Essigsäure, Propionsäure, Buttersäure oder Isobuttersäure zu verstehen, ausserdem Hydroxysäuren wie beispielsweise Glycolsäure, Milchsäure, Äpfelsäure oder Weinsäure, oder auch Sulfonsäuren wie beispielsweise Methansulfonsäure, Benzolsulfonsäure oder Toluolsulfonsäure.

Die erfindungsgemässen Systeme dringen schnell und tief in Holz und Holzwerkstoffe ein, ohne dass partielle Konzentrationsunterschiede im Holz feststellbar sind. Das gleichmässige Eindringen aller Inhaltsstoffe der erfindungsgemässen Systeme aus Bindemittel, kationischen Verbindungen und Wasser ist überraschend, denn kationische Verbindungen wie Ammoniumsalze dringen allein bekanntermassen nicht oder nur in geringem Mass in Holz oder vergleichbare Substrate ein, so dass sich die an sich bekannte biozide Wirkung von aus wässrigen Lösungen aufgebrachten quartären Ammoniumverbindungen normalerweise auf die oberflächennahen Bereiche der Substrate beschränkt. Die vorliegende Erfindung ermöglicht somit, Zubereitungen herzustellen, die lösemittelfrei, langzeitstabil (lagerfähig) und klar durchsichtig sind und eine den lösemittelhaltigen Systemen vergleichbare Penetration in Holz und Holzwerkstoffe zeigen, bei gleichmässiger Verteilung aller Inhaltsstoffe und guter anstrichtechnischer Wirkung und Verarbeitbarkeit.

Vorzugsweise enthalten die erfindungsgemässen Anstrichstoffe und Behandlungsmittel als biozid wirksame Komponente ein quartäres Ammoniumsalz.

Als quartäre Ammoniumsalze eignen sich beispielsweise:
Dimethyl-di(C₈₋₁₈-alkyl)ammoniumhalogenide,
Dimethyl-di(C₈₋₁₈-alkyl)ammoniumsalze organischer Säuren,
Trimethyl-(C₈₋₁₈-alkyl)ammoniumhalogenide,
Trimethyl-(C₈₋₁₈-alkyl)ammoniumsalze organischer Säuren,
Dimethyl-(C₈₋₁₈-alkyl)benzylammoniumhalogenide,
Dimethyl-(C₈₋₁₈-alkyl)benzylammoniumsalze organischer Säuren,
1,1'-Dimethyl-4,4'-bipyridiniumhalogenide,
Di(C₈₋₁₈-alkyl)-methyl-polyoxethylammoniumsalze organischer Säuren,
wobei die Begriffe "C₈₋₁₈-Alkyl" und "organische Säure" die obenstehenden Bedeutungen haben.

Als in Wasser emulgierbare Bindemittel werden vorzugsweise oxidativ trocknende Öle oder Alkydharze eingesetzt.

Zur Verbesserung und Ergänzung der bioziden Wirksamkeit können den erfindungsgemässen Anstrichstoffen und Behandlungsmitteln noch weitere Biozide zugesetzt werden. So können beispielsweise 0,01 bis 10% folgender Wirkstoffe allein oder als Mischung zugesetzt werden:
Amphotenside mit biozider Wirkung
Methyl-benzimidazol-2-yl-carbamat
1,2-Benzisothiazolon-3
Biguanide mit biozider Wirkung
Borderivate auf organischer und anorganischer Basis
α-*tert*-Butyl-α-(*p*-chlorphenethyl)-1*H*-1,2,4-triazol-1-ethanol
2-*sec*-Butyl-phenyl-*N*-methylcarbamat
(±)-cis-4-[3-(*tert*-Butylphenyl)-2-methylpropyl]-2,6-dimethylmorpholin
5-Chlor-2-methyl-4-isothiazolin-3-on
2-(4-Chlorphenyl)-3-cyclopropyl-1-(1*H*-1,2,4-triazol-1-yl)butan-2-ol
1-(6-Chlor-3-pyridinyl)-methyl-4,5-dihydro-*N*-nitro-1*H*-imidazol-2-amin
Chlorhexidin und dessen Salze
Chlorierte Phenole wie beispielsweise Tetra- oder Pentachlorphenol
Chlornitrobenzolderivate
1-[4-(2-Chlor-α,α,α-trifluor-*p*-tolyloxy)-2-fluorphenyl]-3-(2,6-difluorbenzoyl)-harnstoff
1-(4-Chlorphenyl)-3-(2,6-difluorbenzoyl)harnstoff
α-[2-(4-Chlorphenyl)ethyl]-α-(1,1-dimethylethyl)-1*H*-1,2,4-triazol-1-ethanol
(*RS*)-α-Cyano-3-phenoxybenzyl-(*RS*)-2-(4-chlorphenyl)-3-methylbutyrat
α-Cyano-3-phenoxybenzyl-isopropyl-2,4-chlorphenylacetat
*N*-Cyclohexyl-*N*-methoxy-2,5-dimethylfuran-3-carbonsäureamid
Di(guanidinooctyl)amin
1-[2-(2,4-Dichlorphenyl)-1,3-dioxolan-2-yl]methyl]-1*H*-1,2,4-triazol
1-[2-(2,4-Dichlorphenyl)-4-propyl-1,3-dioxolan-2-yl-methyl]-1*H*-1,2,4-triazol
(+)-3-(2,2-Dichlorvinyl)-2,2-dimethylcyclopropan-1-carbonsäure-3-phenoxybenzylester
3-(2,2-Dichlorvinyl)-2,2-dimethylcyclopropan-1-carbonsäure-(α-cyano-3-phenoxybenzyl)ester
(1*R*,3*R*)-3-(2,2-Dibromvinyl)-2,2-dimethylcyclopropan-1-carbonsäure-(α-cyano-3-phenoxybenzyl)ester
3-(2,2-Dichlorvinyl)-2,2-dimethylcyclopropan-1-carbonsäure-(α-cyano-4-fluor-3-phenoxybenzyl)ester
*O*,*O*-Diethyl-*O*-(α-cyanobenzylidenamino)-thiophosphat
*O*,*O*-Diethyl-*O*-3,5,6-trichlor-2-pyridyl-thionophosphat
*O*,*O*-Diethyldithiophosphoryl-6-chlorbenzoxazolon
5,6-Dihydro-2-methyl-1,4-oxathiin-3-carboxanilid
*N*,*N*-Dimethyl-*N'*-phenyl-(*N'*-fluormethylthio)-sulfamid
*N*,*N*-Dimethyl-*N'*-tolyl-(*N'*-fluormethylthio)-sulfamid
*O*,*O*-Dimethyl-*S*-(2-methylamino-2-oxoethyl)-dithiophosphat
*O*,*O*-Dimethyl-*S*-(*N*-phthalimido)-methyldithiophosphat
3,5-Dimethyl-tetrahydro-1,3,5-thiadiazinthion-(2)
Dimethylalkylammoniumsalze
Dithiocarbamate mit Metall- oder Ammoniumkationen
Ethyl-2-(4-phenoxyphenoxy)-ethylcarbamat
2-(2-Furanyl)-1*H*-benzimidazol
Halogenessigsäuren sowie deren Amide und Ester
6,7,8,9,10-Hexachlor-1,5,5a,6,9,9a-hexahydro-6,9-methano-2,3,4-benzodioxothiepien-3-oxid
Hexachlorcyclohexan
8-Hydroxychinolin sowie dessen halogenierte Derivate
Kupfer-8-oxychinolin
2-Iodbenzoesäureanilid
(3-Iod-2-propinyl)butylcarbamat
*N*-Methyl-1-naphthylcarbamat
2-Methyl-4-isothiazolin-3-on
Methylenbisthiocyanat
Nitroalkanole mit biozider Wirkung
*N*-Nitroso-*N*-cyclohexylhydroxylamin und dessen Salze
*N*-Nitroso-*N*-phenylhydroxylamin und dessen Salze
Norbornen-dimethanohexachlorcyclosulfit
2-*n*-Octyl-4-isothiazolin-3-on und dessen Halogenderivate
Organozinnverbindungen, wie beispielsweise Tributylzinnoxid und
Tributylzinnbenzoat
Phenylphenole
2-Isopropoxyphenyl-*N*-methylcarbamat
*N*-Propyl-*N*-[2-(2,4,6-trichlorphenoxy)-ethyl]imidazol-1-carboxamid
Pyridin-2-thiol-1-oxid und dessen Salze
Salicylanilid sowie halogenierte Derivate
(4-Ethoxyphenyl)[3-(4-fluor-3-phenoxyphenyl)propyl]dimethylsilan
*N*-(1,1,2,2-Tetrachlorethylthio)-3,6,7,8-tetrahydrophthalimid
Tetrachlorisophthalsäuredinitril
2-(Thiazol-4-yl)benzimidazol
2-(Thiocyanomethylthio)benzothiazol
1-(1,2,4-Triazol-1-yl)-1-(4-chlorphenoxy)-3,3-dimethylbutan-2-ol
1-(1,2,4-Triazol-1-yl)-1-(4-chlorphenoxy)-3,3-dimethylbutan-2-on
*N*-Trichlormethylthio-3,6,7,8-tetrahydrophthalimid
*N*-Trichlormethylthiophthalimid
*N*-Tridecyl-2,6-dimethylmorpholin

Weiterhin können die erfindungsgemässen Anstrichstoffe und Behandlungsmittel gegebenenfalls Hilfs- und Zusatzstoffe enthalten, beispielsweise zur Hydrophobierung, zum Schutz gegen UV-Licht, zum Schutz gegen Alterung, zur Färbung und dekorativen Gestaltung oder zur Haftungsverbesserung für den weiteren Anstrichaufbau.

Ein Verfahren zur Herstellung der erfindungsgemässen Anstrichstoffe und Behandlungsmittel besteht darin, zunächst Bindemittel und biozides Amin-bzw. Ammoniumsalz zu mischen und dann das Wasser zuzugeben. Hierbei können gegebenenfalls weitere organische Wirkstoffe (Fungizide, Insektizide, Bakterizide, Algizide, Herbizide etc.) im Bindemittel/Amin-Gemisch gelöst werden, ohne bei der späteren Zugabe von Wasser auszufallen oder zu kristallisieren. Somit ist es möglich, klare und sedimentfreie Zubereitungen zu erhalten, die organische Wirkstoffe - quasi gelöst - enthalten, ohne dass organische Lösemittel oder Lösevermittler (wie z. B. Glycolderivate) darin enthalten sein müssen. Zum Schutz von Holz und/oder cellulosehaltigen Substraten gegen biologische Materialzerstörung können die erfindungsgemässen Anstrichstoffe und Behandlungsmittel durch Streichen, Rollen, Spritzen oder Tauchen auf das zu schützende Substrat aufgebracht werden.

Die nachfolgenden Beispiele verdeutlichen die Ausführung der Erfindung, ohne dass darin eine Einschränkung zu sehen ist.

In den Beispielen wurden folgende emulgierbare Bindemittel eingesetzt: (Die Prozentangaben sind in Massenprozenten und beziehen sich auf die gesamte Bindemittelzusammensetzung)

### Bindemittel A

95% Leinölalkydharz (Ölanteil 90%), 5% Kokosfettalkoholethoxylat (12 EO-Gruppen)

### Bindemittel B

95% Sojaalkydharz (Ölanteil 85%), 5%p-Nonylphenolethoxylat (9 EO-Gruppen)

### Bindemittel C

94% Leinöl, 3% Maleinsäure, 3% Polyethylenglycol (10 EO-Gruppen). Herstellung: Leinöl wird mit Maleinsäure auf 180 °C erhitzt und anschliessend mit Polyethylenglycol bei 195°C verestert.

### Bindemittel D

92% Sojaöl, 3% Maleinsäure, 5% Polypropylenglycol (12 PO-Gruppen). Herstellung: Sojaöl wird mit Maleinsäure auf 180 °C erhitzt und anschliessend mit Polypropylenglycol bei 170 °C verestert.

### Bindemittel E

85% Polybutadienöl (C₁₂ bis C₂₀-Kettenlänge), 5% Maleinsäure, 10% Polyethylenglycol (10 EO-Gruppen). Herstellung: Polybutadienöl wird mit Maleinsäure auf 150°C erhitzt und das Reaktionsprodukt mit Polyethylenglycol bei 150°C verestert.

### Bindemittel F

80% Leinöl, 12% Neopentylglycol, 8% Ethylenoxid. Herstellung: Leinöl wird bei 170° C mit Neopentylglycol umgesetzt und das Reaktionsprodukt unter Druck mit Ethylenoxid ethoxyliert.

Die vorstehend beispielhaft beschriebenen Bindemittel ergeben ohne weitere Zusätze mit Wasser (1:10) typische undurchsichtige (milchige) Emulsionen. Bindemittel nach A und B enthalten einen separaten Emulgator, C bis F hydrophile (emulgierende) Molekülgruppen.

### Beispiel 1

10,0% Bindemittel C
10,0% Didecyldimethylammoniumchlorid (50%ig in Wasser)
0,8% Propiconazol
79,2% Wasser

### Beispiel 2

15,0% Bindemittel D
6,0% Dimethyl-(C₈₋₁₈-alkyl)benzylammoniumchlorid (80%ig in Wasser)
0,5% Iodpropinylbutylcarbamat
0,5% Tebuconazole
78,0% Wasser

### Beispiel 3

20,0% Bindemittel E
15,0% Didecyldimethylammoniumchlorid (40%ig in Wasser)
2,0% Tri-*n*-butylzinnoxid
63,0% Wasser

### Beispiel 4

10,0% Bindemittel C
10,0% Didecyldimethylammoniumlactat (40%ig in Wasser)
0,2% Silafluofen
0,4% Carboxim
0,4% Iodpropinylbutylcarbamat
79,0% Wasser

### Beispiel 5

20,0% Bindemittel C
10,0% *N*,*N*-Didecyl-*N*-methyl-*N*-poly(oxethyl)-ammoniumpropionat (1-5
Oxethylgruppen; 70%ig in Wasser)
1,0% Cyproconazol
69,0% Wasser

### Beispiel 6

10,0% Bindemittel F
10,0% C₈₋₁₈-Alkyltrimethylammoniumchlorid (50%ig in Wasser)
2,0% Procloraz
0,2% Silafluofen
1,0% Neozapongelb
76,8% Wasser

### Beispiel 7

12,0% Bindemittel C
10,0% Didecyldimethylammoniumchlorid (50%ig in Wasser)
1,0% Tebuconazole
1,0% UV-Absorber (Benzophenonderivat)
1,0% Entschäumer (Silicon)
1,0% löslicher Azofarbstoff grün
74,0% Wasser

### Vergleichsbeispiel 1 (nicht erfindungsgemäss)

10,0% Bindemittel A
5,0% Butyldiglycol
0,8% Propiconazol
84,2% Wasser

### Vergleichsbeispiel 2 (nicht erfindungsgemäss)

15,0% Bindemittel C
1,0% Tebuconazole
10,0% Diethylenglycol
74,0% Wasser

### Vergleichsbeispiel 3 (nicht erfindungsgemäss)

10,0% Alkydharz, Sojaöltyp
0,5% Dichlofluanid
1,0% Tebuconazole
10,0% Dipropylenglycolmonomethylether
78,5% Testbenzin (Kp. 180-220 °C)

Die Eigenschaften der beispielgemässen Formulierungen sowie deren Eindringverhalten und deren Schutzwirkung gegen Schadpilze auf Kiefernholz sind in der folgenden Tabelle 1 zusammengefasst.

**Tabelle 1**

| **Beispiel** | **klar**^{**1)**} | **Stabilität**^{**2)**} | **Lösemittel**^{**3)**} | **entflammbar**^{**4)**} | **Eindringtiefe**^{**5)**} | **Schutz**^{**6)**} |
|---|---|---|---|---|---|---|
| 1 | + | + | - | - | 3-6 mm | ++ |
| 2 | + | + | - | - | 4-6 mm | ++ |
| 3 | + | + | - | - | 2-4 mm | ++ |
| 4 | + | + | - | - | 4-5 mm | ++ |
| 5 | + | + | - | - | 2-3 mm | ++ |
| 6 | + | + | - | - | 4-6 mm | ++ |
| 7 | + | + | - | - | 4-7 mm | ++ |
| V1 | - | - | + | - | 0-1 mm | + |
| V2 | - | - | + | - | 0-2 mm | + |
| V3 | + | + | + | + | 4-6 mm | + |

| | | | | | | |
|---|---|---|---|---|---|---|
| ¹⁾: + = keine sichtbare Trübung, keine Phasentrennung \| - = Trübung und/oder Phasentrennung | | | | | | |
| ²⁾: 4 Monate Lagerung bei 50 °C: + = stabil (keine Trübung, keine Phasentrennung, keine Viskositätsänderung, keine Verfärbung) \| - = nicht stabil | | | | | | |
| ³⁾: + = enthält organische Lösemittel \| - = ohne organische Lösemittel | | | | | | |
| ⁴⁾: + = entflammbar \| - = nicht entflammbar (kein messbarer Flammpunkt) | | | | | | |
| ⁵⁾: in Kiefernsplintholz, Auftragsmenge 200 g/m² | | | | | | |
| ⁶⁾: Prüfung in Anlehnung an DIN EN 113 (Oberflächenverfahren) bei 100 g/m² Auftragsmenge (4 Pilzarten); ++ = hoch \| + = mässig | | | | | | |

## Patentansprüche

1. Anstrichstoff oder Behandlungsmittel, insbesondere zum Schutz von Holz und/oder zellulosehaltigen Substraten gegen biologische Materialzerstörung, **dadurch gekennzeichnet, dass** er/es wenigstens
(i) 2 bis 50%, vorzugsweise 5 bis 25%, eines in Wasser emulgierbaren Bindemittels, ausgewählt aus natürlichen und synthetischen Ölen, Alkydharzen auf Basis natürlicher oder synthetischer Öle, sowie Gemischen der genannten Öle und/oder Alkydharze, und
(ii) 0,5 bis 40%, vorzugsweise 1 bis 10 %, einer biozid wirksamen Komponente, ausgewählt aus den Salzen von primären, sekundären und tertiären Aminen, quartären Ammoniumsalzen, sowie Gemischen dieser Salze, wobei die biozid wirksame Komponente mindestens eine Alkylgruppe mit 6 bis 24 Kohlenstoffatomen enthält, und
(iii) Wasser
enthält, frei von organischen Lösungsmitteln und klar und lagerstabil ist.

2. Anstrichstoff oder Behandlungsmittel nach Anspruch 1, **dadurch gekennzeichnet, dass** er/es als biozid wirksame Komponente ein quartäres Ammoniumsalz enthält.

3. Anstrichstoff oder Behandlungsmittel nach Anspruch 1 oder 2, **dadurch gekennzeichnet, dass** er/es als in Wasser emulgierbares Bindemittel ein oxidativ trocknendes Öl oder Alkydharz enthält.

4. Anstrichstoff oder Behandlungsmittel nach einem der Ansprüche 1 bis 3, **dadurch gekennzeichnet, dass** er/es ausser den in Anspruch 1 genannten Komponenten noch wenigstens ein weiteres Biozid enthält.

5. Verfahren zur Herstellung eines Anstrichstoffes oder Behandlungsmittels gemäss einem der Ansprüche 1 bis 4, **dadurch gekennzeichnet, dass** zunächst das Bindemittel mit dem biozid wirksamen Amin-bzw. Ammoniumsalz und gegebenenfalls weiteren Bioziden gemischt und das so erhaltene Gemisch mit Wasser verdünnt wird.

6. Verfahren zum Schutz von Holz und/oder cellulosehaltigen Substraten gegen biologische Materialzerstörung, **dadurch gekennzeichnet, dass** auf diese(s) ein Anstrichstoff oder Behandlungsmittel gemäss einem der Ansprüche 1 bis 4 durch Streichen, Rollen, Spritzen oder Tauchen aufgebracht wird.

## Claims

1. Coating material or treatment composition, especially for protecting wood and/or cellulosic substrates against biological material destruction, **characterized in that** it comprises at least
(i) from 2 to 50%, preferably from 5 to 25%, of a water-emulsifiable binder selected from natural or synthetic oils, alkyd resins based on natural or synthetic oils, and mixtures of the said oils and/or alkyd resins,
(ii) from 0.5 to 40%, preferably from 1 to 10%, of a biocidal component selected from the salts of primary, secondary and tertiary amines, quaternary ammonium salts, and mixtures of these salts, the biocidal component comprising at least one alkyl group having 6 to 24 carbon atoms, and
(iii) water
and is transparent and storage-stable.

2. Coating material or treatment composition according to Claim 1, **characterized in that** it comprises as biocidal component a quaternary ammonium salt.

3. Coating material or treatment composition according to Claim 1 or 2, **characterized in that** it comprises as water-emulsifiable binder an oxidatively drying oil or alkyd resin.

4. Coating material or treatment composition according to one of Claims 1 to 3, **characterized in that** in addition to the components specified in Claim 1 it further comprises at least one further biocide.

5. Process for preparing a coating material or treatment composition according to one of Claims 1 to 4, **characterized in that** first the binder is mixed with the biocidal amine and/or ammonium salt and, if desired, further biocides and the resulting mixture is diluted with water.

6. Method of protecting wood and/or cellulosic substrates against biological material destruction, **characterized in that** a coating material or treatment composition according to one of Claims 1 to 4 is applied by brushing, rolling, spraying or dipping to the said wood and/or substrates.

## Revendications

1. Composition d'enduction ou composition de traitement, en particulier pour la protection du bois et/ou de subjectiles contenant de la cellulose, contre la destruction biologique de matériaux, **caractérisée en ce qu'**elle contient au moins
(i) 2 à 50 %, de préférence 5 à 25 %, d'un liant émulsifiable dans l'eau, choisi parmi des huiles naturelles et synthétiques, des résines alkyde à base d'huiles naturelles ou synthétiques, ainsi que des mélanges des huiles et/ou résines alkyde citées, et
(ii) 0,5 à 40 %, de préférence 1 à 10 %, d'un composant à activité biocide, choisi parmi les sels d'amines primaires, secondaires et tertiaires, les sels d'ammonium quaternaire ainsi que des mélanges de ces sels, le composant à activité biocide comportant au moins un groupe alkyle ayant de 6 à 24 atomes de carbone, et
(iii) de l'eau
est exempte de solvants organiques et limpide et stable au stockage.

2. Composition d'enduction ou composition de traitement selon la revendication 1, **caractérisée en ce qu'**elle contient comme composant à activité biocide un sel d'ammonium quaternaire.

3. Composition d'enduction ou composition de traitement selon la revendication 1 ou 2, **caractérisée en ce qu'**elle contient en tant que liant émulsifiable dans l'eau une huile ou résine alkyde séchant par oxydation.

4. Composition d'enduction ou composition de traitement selon l'une quelconque des revendications 1 à 3, **caractérisée en ce qu'**outre les composants cités dans la revendication 1, elle contient encore au moins un autre liant.

5. Procédé pour la préparation d'une composition d'enduction ou composition de traitement selon l'une quelconque des revendications 1 à 4, **caractérisée en ce que** le liant est d'abord mélangé avec le sel d'amine ou d'ammonium à activité biocide et éventuellement d'autres biocides, et le mélange ainsi obtenu est dilué avec de l'eau.

6. Procédé pour la protection du bois et/ou de subjectiles contenant de la cellulose contre la destruction biologique de matériaux, **caractérisé en ce qu'**on applique sur celui-ci(ceux-ci), par enduction au pinceau, enduction au rouleau, pistolage ou trempage, une composition d'enduction ou composition de traitement selon l'une quelconque des revendications 1 à 4.
